# EUROPEAN PATENT APPLICATION

(11) **EP 1 413 976 A1**
(43) Date of publication of application: **28.04.2004**
(21) Application number: 02102470.8
(22) Date of filing: 22.10.2002
(51) Int. Cl.: G06K 11/18

(54) **Method and arrangement for input mode selection**

(71) Applicant: Nokia Corporation, 00045 Espoo (FI)
(72) Inventor: Tokkonen, Timo, 90800 Oulu (FI)
(74) Representative: Brockman, Pertti Erik

(57) **Abstract**

The invention relates to an arrangement and a method of an input mode selection for an electronic device comprising a display screen (106), a stylus (300) and at least two input modes. In the method, the input mode of the device is selected on the basis of the interaction type of the stylus (300) with the device.

## Description

### Field

The invention relates to an input mode selection arrangement for an electronic device having a stylus for inputting data via a display screen of the device and to a respective method.

### Background

Several types of electronic devices comprise a user interface which enables the user to interact with the device. A typical user interface comprises a display and a keyboard. In addition, portable electronic devices such as compact hand-held devices commonly referred to as PDA (Personal Digital Assistant) devices, hand-held computers and mobile phones are often operated with a pen-like stylus, which may be used to give commands and input data to the device. Commands are typically given by activating menu items shown on a display screen of the device by touching the various icons or areas on the screen. Data may be input to the device by writing or drawing directly on the display screen.

The stylus is thus used basically in two different purposes, to give commands and to input data to the device. Therefore the device typically comprises at least two different input modes, a command mode or a browsing mode and an editing mode. In the former mode the device expects commands from the user, and in the latter mode the device is expects data. There is no possibility for that the device could be aware of the next action of the user of the device. Therefore, in present devices, the user has to give a separate command for the device to inform it that the next action will be inputting data, and not another command, for example. The commands are typically given by pressing a button or selecting a menu command. This operation forces a user to interrupt the action to be performed, execute the command, and continue inputting data after the device has been sent to a mode where it accepts data from the user.

### Brief Description of the Invention

It is an object of the invention to provide an improved method and arrangement for input mode selection. This is achieved by an input mode selection method for an electronic device comprising a display screen, a stylus and at least two input modes. In the method, the input mode of the device is selected on the basis of the interaction type of the stylus with the device.

The invention also relates to a mode selection arrangement for an electronic device having a stylus for inputting data via a display screen of the device, the stylus having at least two interaction types with the device. The device comprises means for detecting the interaction type the stylus uses, and means for selecting the input mode on the basis of the interaction type.

Preferred embodiments of the invention are described in the dependent claims.

The method and system of the invention provide several advantages. In a preferred embodiment of the invention the device monitors the size of the tip of the stylus and selects an input mode on the basis of the detected tip size. Thus, after detecting a smaller tip the device could be in editing mode and after detecting a blunt tip the device could be expecting commands instead of data input. In this way the user can proceed using the device without any needless interruptions. The switch from an editing mode to a browsing mode (where commands are given) may happen by just changing the tip of the stylus.

In another preferred embodiment where the usage of the stylus is not based on touching but emitting a light beam, the device monitors the wavelength of the light beam emitted by the stylus.

### List of Drawings

In the following, the invention will be described in greater detail with reference to the preferred embodiments and the accompanying drawings, in which
Figures 1A to 1C illustrate a structure of an electronic device according to an embodiment;
Figure 2 illustrates a method according to an embodiment and
Figures 3A to 3F illustrate a stylus.

### Description of Embodiments

The preferred embodiments of the invention can be applied in electronic devices such as mobile equipment, which is used as terminal equipment in a communication system comprising base stations and terminal equipment communicating with the base stations. In some embodiments of the invention, electronic devices may comprise means for short distance communication. These means may be realized by means of a Bluetooth chip, infrared transceiver or WLAN transmitter (Wireless Lan). The device may be for example a mobile phone, laptop computer, smart phone or another handheld computer device such as a PDA (Personal Digital Assistant). It is not necessary for the device to have any data communication means.

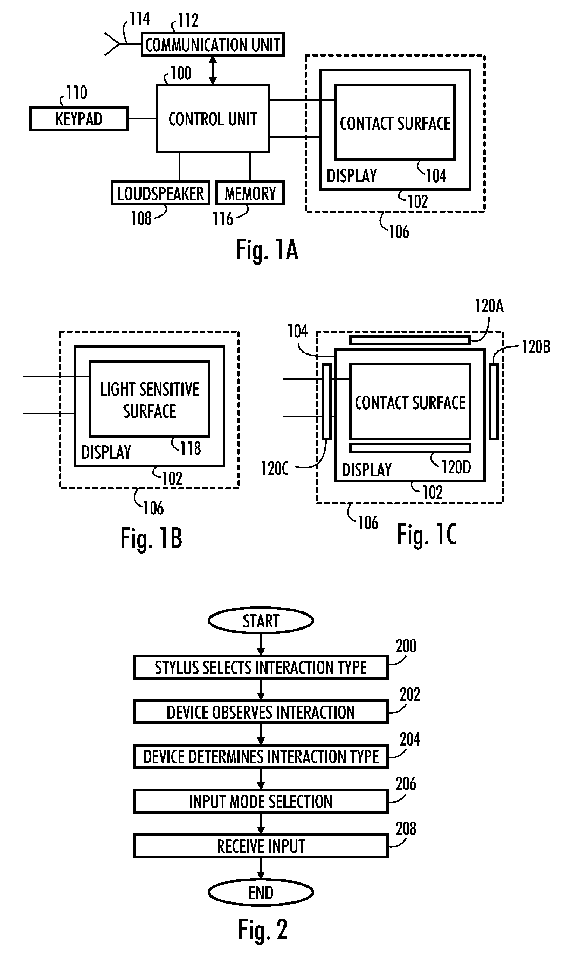

The structure of an electronic device according to an embodiment is illustrated in Figure 1A. The basic functions of the device are controlled by a controller 100 which is typically realized using a microprocessor and appropriate software or separate logic circuits. The user interface of the device comprises a display 102 and a touch sensitive surface 104, which together form a touch screen 106. A touch screen is obtained when a touch sensitive surface 104 is placed upon a display 102. It is also possible to implement a touch screen 106 by not placing anything upon the screen but by detecting touch by some other means. The display is typically a liquid crystal screen. The touch sensitive area is not necessarily of the same size as the display. It is also possible that the device comprises a display and a separate touch pad.

The user interface of the device may further comprise a speaker 108, a keypad 110 and a pointing device such as a stylus. The user interface of the device may vary depending on the type of the device. In addition, the device may comprise communication means 112, which may comprise speech and channel encoders, modulators and radio frequency parts, for example, and an antenna 114.

Referring to Figure 1B, in some embodiments the touch sensitive surface may also be replaced with a surface 118 sensitive for certain wavelengths of light. In such cases the use of a pointing device, such as a stylus, is not based on touching the screen but the stylus is equipped to transmit a narrow light beam of a given wavelength.

Referring to Figure 1C, the device may, in addition to a touch screen, comprise means 120A to 120D for detecting the location of a stylus and the distance of the stylus from the screen by optical means. This may be realised by optical sensors well known in the art.

A method according to an embodiment of the invention is illustrated in a flow chart in Figure 2. In the first step 200 the stylus selects an interaction type to be used with the device in response to control input from a user. The interaction type depends on the physical properties of the stylus and those of the device.

In an embodiment, the size or the form of the tip of the stylus is changed. Thus, a larger tip is used for a certain input mode and a smaller tip is used in another input mode. A smaller tip may be used for editing mode, that is, for giving for example textual or graphical information to the device. A larger tip may be used in browsing mode, that is, for giving different commands to the device.

In a second embodiment, the wavelength emitted by the stylus device is changed. Thus, a given wavelength may used for certain input type and another wavelength may used in another input type. For example, a blue light beam may be used for editing mode, that is, for giving for example textual or graphical information to the device. Correspondingly, a red light beam may be used in browsing mode, that is, for giving different commands to the device.

In the second step 202 the device observes an interaction by the stylus. The user has thus used the stylus as an input device, for example by pressing the tip of the stylus on the touch sensitive surface 104 of the device. The screen detects the touch and sends information about the touching to the control unit 100 of the device.

In step 204 the device determines the type of the interaction. In the first embodiment the device registers the size of the area pressed by the tip of the stylus on the touch sensitive surface 104. In another embodiment the device receives a light beam emitted by the stylus with a light sensitive surface 118 and measures the wavelength of the beam.

In the following step 206 the device selects an input mode on the basis of the interaction type. In the first embodiment the device may compare the determined stylus tip size to given thresholds and on the basis of the comparison determine whether a large or a small tip of the stylus is used. Then, the device selects the input mode that corresponds to the observed tip size. In another embodiment the device compares the measured wavelength to given thresholds and on the basis of the comparison the device may determine the input mode to be used.

In step 208 the device receives input using the selected input mode.

In the example described above the device comprised two input modes. Nevertheless, the number of input modes is not restricted to two. Depending on the type of the device, there may be several different input modes. In a preferred embodiment the number of different interaction types of a stylus used with the device is the same as the number of input types. The invention is not, however, restricted to such an embodiment.

The device may comprise a memory 116, where different threshold values and respective interaction types used by a stylus are stored. When the control unit 100 of the device receives information from the screen 106 about an interaction and also parameters of the interaction, such as the area of the surface which has been touched, the control unit 100 may read different threshold surface areas from the memory 116, compare the received information with the stored threshold values, read the input mode corresponding to the observed value from the memory and select the input mode.

Let us briefly study an example. Assume that the device comprises a touch sensitive surface 104 and two input modes, a browsing mode and an editing mode. One threshold value TH is stored in the memory. Let us assume that the user of the device selects a tip of a given size for a stylus and touches the touch sensitive screen with the stylus. The touch sensitive screen registers the touch and determines the size of area touched, and sends information about the area A to the control unit 100. The control unit reads the threshold TH from the memory 116 and compares the measured area A with the threshold TH. If A < TH, then the control unit determines which input mode corresponds to such a result and selects the correct input mode. In case A ≥ TH the other input mode is selected.

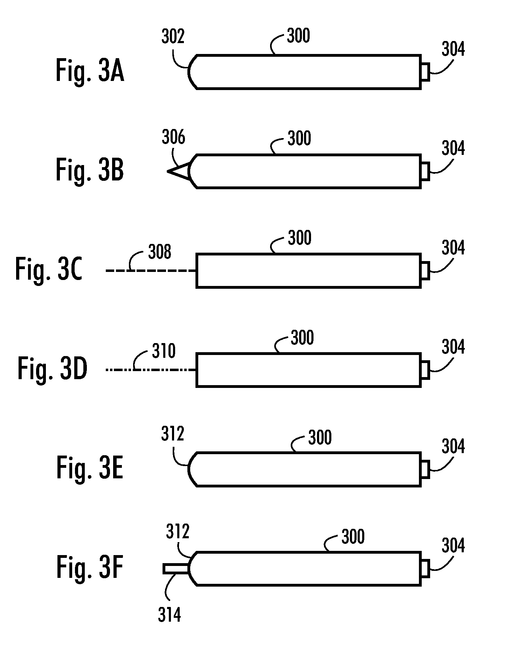

Figures 3A to 3D illustrate examples of styluses. Figures 3A and 3B illustrate a stylus 300 used for a touch sensitive surface. In Figure 3A the tip 302 of the stylus in blunt. The stylus comprises a control means 304, for example a button or a switch, with which the tip may be changed into a sharp tip 306. The blunt tip 302 may be used in browsing mode to give commands to the device and the sharp tip 306 may be used in editing mode, for example. Thus, the operation of the stylus resembles the operation of a ballpoint pen, which makes the use of the solution very intuitive for the user.

Figures 3C and 3D illustrate a stylus 300 used for a light sensitive surface. In Figure 3C the tip 302 of the stylus emits a beam 308 of a given wavelength. The wavelength of the beam may be changed into another wavelength 310 with the control means 304 of the stylus, Figure 3D. Visually the change of the wavelength can typically be seen as a different colour of the light beam. The first wavelength 308 may be used in browsing mode to give commands to the device and the other wavelength 310 may be used in editing mode, for example.

Figures 3E and 3F illustrate a stylus 300 used in connection with optical sensors in Figure 1 C. In Figure 3E the tip 312 of the stylus is blunt and coloured with a colour of good visibility. When the stylus is used, the optical sensors 120A to 120D detect the distance of the blunt tip from the screen. When the tip of the stylus is changed into a form of Figure 3F where the stylus has a sharp tip, the blunt part of the stylus moves thus further away from the screen. The optical sensors 120A to 120D detect again the distance of the blunt tip from the screen. In this embodiment the device makes the decision concerning the desired input mode on the basis of the distance of the blunt part of the stylus tip. When the blunt tip is farther away from the screen due to the additional sharp tip 314, the device switches to the editing mode and when the blunt tip is closer to the screen the device switched to the command mode, for example.

Even though the invention is described above with reference to an example according to the accompanying drawings, it is clear that the invention is not restricted thereto but it can be modified in several ways within the scope of the appended claims.

## Claims

1. An input mode selection method for an electronic device comprising a display screen (106), a stylus (300) and at least two input modes, **characterized in that** the input mode of the device is selected on the basis of the interaction type of the stylus (300) with the device.

2. The method of claim 1, **characterized by** selecting an input mode on the basis of the size of the tip of the stylus.

3. The method of claim 1, **characterized by**
the device observing an interaction by the stylus,
the device determining the type of the interaction,
the device selecting an input mode on the basis of the interaction type.

4. The method of claim 1, **characterized by** the device selecting an input mode on the basis of the wavelength of the beam emitted by the stylus.

5. The method of claim 1, **characterized by** the device selecting between a command receiving mode and an editing mode.

6. A mode selection arrangement for an electronic device having a stylus (300) for inputting data via a display screen (106) of the device, the stylus having at least two interaction types with the device,
**characterized in that** the device comprises means (104, 118) for detecting the interaction type the stylus uses, and means (100) for selecting the input mode on the basis of the interaction type.

7. The arrangement of claim 6, **characterized in that** the means (100) are arranged to select an input mode on the basis of the size of the tip of the stylus.

8. The arrangement of claim 7, **characterized in that** the device comprises means (104) for observing the size of the tip of the stylus.

9. The arrangement of claim 6, **characterized in that** the device comprises means (118) for observing the wavelength of the beam emitted by the stylus and means (100) for selecting an input mode on the basis of the wavelength.

10. The arrangement of claim 6, **characterized in that** the device comprises a touch sensitive surface (104).

11. The arrangement of claim 6, **characterized in that** the device comprises a light sensitive input surface (118).
